# EUROPEAN PATENT APPLICATION

(11) **EP 4 559 587 A1**
(43) Date of publication of application: **28.05.2025**
(21) Application number: 23842893.2
(22) Date of filing: 12.07.2023
(51) Int. Cl.: B05D 3/00, B05D 3/06, B05D 3/12, B05D 7/00, B05D 7/24, F16J 15/00, F16J 15/14, H01M 8/0286

(54) **GASKET MOLDING METHOD, GASKET, FUEL CELL COMPONENT, FUEL CELL, FUEL CELL PRODUCTION METHOD, SEALING METHOD, AND GASKET MOLDING DEVICE**

(30) Priority: 21.07.2022 JP 2022116706
(71) Applicant: ThreeBond Co., Ltd., Tokyo 192-0398 (JP)
(72) Inventor: KADO, Takuma, Hachioji-shi, Tokyo 192-0398 (JP)
(74) Representative: Haseltine Lake Kempner LLP
(86) International application number: PCT/JP2023/025787
(87) International publication number: WO 2024/018970

(57) **Abstract**

The present invention is a gasket molding method for molding a gasket on a workpiece, the method comprising, in the stated order: an application step (S1) for applying, to the inner side of a cavity of a molding die, an active energy ray curable liquid; a bonding step (S2) for bonding the molding die, to which the active energy ray curable liquid has been applied, and a workpiece; a precuring step (S3) for emitting active energy rays with a cumulative light amount achieving a reaction rate of 20%-85%; a mold releasing step (S4) for peeling off, from the molding die, the precured active energy ray curable liquid together with the workpiece; and a main curing step (S5) for emitting active energy rays with a cumulative light amount achieving a reaction rate of more than 85% and up to 100%. The present invention thereby provides a gasket molding method that improves productivity even using a molding die.

## Description

### Technical Field

The present invention relates to a gasket molding method, a gasket, a fuel cell component, a fuel cell, a fuel cell production method, a sealing method, and a gasket molding device.

### Background Art

A gasket is known as a component for sealing the space between two parts. Typically, such gaskets are manufactured by injection molding, where a mold with a cavity of the desired shape is filled with a molding resin, such as a thermoplastic resin.

On the other hand, for example, Patent Document 1 discloses another method for molding a gasket, in which an ultraviolet (UV)-curable resin is directly applied onto a workpiece and cured by irradiating it with UV light, thereby forming a gasket on the workpiece.

According to Patent Document 1, the UV-curable resin is cured while being pressed down with a light-transmitting member at the junction between the start and end points of the application. However, since the resin is applied directly onto the workpiece, it may drip before curing depending on its viscosity and mass, resulting in poor shape stability (especially in the height dimension).

For this reason, a molding method has been considered in which a UV-curable resin is applied to a molding die having a cavity and cured in a state where the molding die and a workpiece are joined together.

### Prior Art Document

### Patent Document

Patent Document 1: Japanese Patent Application Publication No. 2017-159287

### Summary of the Invention

### Problems to be Solved by the Invention

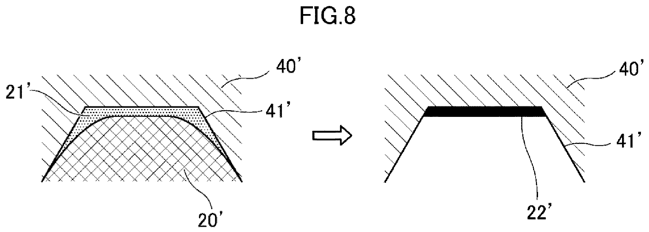

However, in this molding method, it has been observed that, as illustrated in FIG. 8, outgassing 21' occurs due to volatile components contained in a UV-curable resin 20' as the resin cures (see the left side of FIG. 8). The outgassed substances adhere to the inside of a cavity 41' of a molding die 40' and gradually accumulate (deposit) as the number of uses of the molding die increases (see the right side of FIG. 8). When deposits 22' accumulate in the cavity 41' of the molding die 40', the dimensional accuracy of the molded gasket may be adversely affected, and transfer marks from the deposits may cause scratches, leading to reduced sealing performance. Therefore, cleaning operations, such as washing, scrubbing, or wiping the molding die, need to be performed after a certain number of uses, which results in a decrease in productivity.

The present invention has been made in view of the above disadvantages, and its object is to provide a gasket molding method that enhances productivity even when a molding die is used, as well as a gasket, a fuel cell component, a fuel cell, a fuel cell production method, a sealing method, and a gasket molding device.

### Means for Solving the Problems

(1) According to an aspect of the invention, there is provided a gasket molding method for molding a gasket on a workpiece. The method includes, in the order recited: an application step of applying an active energy ray curable liquid into a cavity of a transparent molding die; a bonding step of bonding the molding die coated with the active energy ray curable liquid and the workpiece; a provisional curing step of irradiating the applied active energy ray curable liquid with an active energy ray at a cumulative light amount that achieves a reaction rate of 20% or more and 85% or less as calculated from an IR spectrum; a demolding step of removing the provisionally cured active energy ray curable liquid from the molding die together with the workpiece; and a main curing step of irradiating the provisionally cured active energy ray curable liquid with an active energy ray at a cumulative light amount that achieves a reaction rate of more than 85% and up to 100% as calculated from the IR spectrum.
(2) In the above aspect (1), in the provisional curing step, the applied active energy ray curable liquid may be irradiated with an active energy ray having a wavelength of 320 nm or more and 450 nm or less and a peak intensity of 500 mW/cm² or more and 5000 mW/cm² or less.
(3) In the above aspect (1) or (2), in the provisional curing step, the applied active energy ray curable liquid may be provisionally cured by irradiation with an active energy ray at a low cumulative light amount of 100 mJ/cm² or more and 500 mJ/cm² or less, and in the main curing step, the provisionally cured active energy ray curable liquid may be fully cured by irradiation with an active energy ray at a high cumulative light amount of 1000 mJ/cm² or more and 10000 mJ/cm² or less.
(4) In any one of the above aspects (1) to (3), the application step may be performed using a dispenser.
(5) In any one of the above aspects (1) to (4), the molding die may be made of one or more materials selected from the group consisting of polymethyl methacrylate, cycloolefin polymer, polycarbonate, and glass.
(6) In any one of the above aspects (1) to (5), the workpiece may be a fuel cell component.
(7) According to another aspect of the invention, there is provided a gasket obtained by the gasket molding method as set forth in any one of the above aspects (1) to (5).
(8) According to still another aspect of the invention, there is provided a fuel cell component including a gasket obtained by the gasket molding method as set forth in any one of the above aspects (1) to (6).
(9) According to still another aspect of the invention, there is provided a fuel cell including a gasket obtained by the gasket molding method as set forth in any one of the above aspects (1) to (6).
(10) According to still another aspect of the invention, there is provided a fuel cell production method using the gasket molding method in any one of the above aspects (1) to (6), in which the fuel cell component is selected from the group consisting of a separator, an electrolyte membrane, a frame, and an electrolyte membrane/electrode assembly.
(11) According to still another aspect of the invention, there is provided a sealing method for sealing between two components. The method includes: a molding step of molding a gasket on one component by the gasket molding method in any one of the above aspects (1) to (6); and a crimping step of placing the other component on the gasket molded on the one component and crimping the one component and the other component together.
(12) According to still another aspect of the invention, there is provided a gasket molding device including: an application device that ejects an active energy ray curable liquid onto a molding die using a dispenser; a drive device that moves the molding die and the dispenser relative to each other; a bonding device that includes the molding die having transparency and bonds a workpiece to the molding die; and an active energy ray irradiation device that irradiates the active energy ray curable liquid with an active energy ray. The active energy ray irradiation device is configured to irradiate, through the molding die, the ejected active energy ray curable liquid with an active energy ray at a cumulative light amount that achieves a reaction rate of 20% or more and 85% or less as calculated from an IR spectrum. The active energy ray irradiation device is further configured to irradiate the provisionally cured active energy ray curable liquid, which has been removed from the molding die together with the workpiece, with an active energy ray at a cumulative light amount that achieves a reaction rate of more than 85% and up to 100% as calculated from the IR spectrum.

### Effects of the Invention

According to the aspects of the invention, it is possible to provide a gasket molding method that enhances productivity even when a molding die is used, as well as a gasket, a fuel cell component, a fuel cell, a fuel cell production method, a sealing method, and a gasket molding device.

### Brief Description of the Drawings

[FIG. 1] FIG. 1 is a schematic plan view of a workpiece in which a gasket is molded.
[FIG. 2A] FIG. 2A is a flowchart illustrating a gasket molding method according to an embodiment of the invention.
[FIG. 2B] FIG. 2B is a diagram illustrating the operation of the gasket molding method according to the embodiment of the invention.
[FIG. 3] FIG. 3 is a schematic perspective view of a molding die.
[FIG. 4] FIG. 4 is a schematic cross-sectional view of a fuel cell.
[FIG. 5] FIG. 5 is a flowchart illustrating a sealing method for sealing between two components.
[FIG. 6] FIG. 6 is a graph illustrating the durability of a molding die used in the gasket molding method according to the embodiment.
[FIG. 7] FIG. 7 is a graph illustrating the durability of a molding die used in a conventional gasket molding method.
[FIG. 8] FIG. 8 is a schematic diagram illustrating how outgassed components accumulate on the molding die in the conventional gasket molding method.

### Modes for Carrying Out the Invention

Exemplary embodiments of the invention will be described in detail below with reference to the accompanying drawings. Note that like parts are designated by like reference numerals or characters throughout the description of the embodiments.

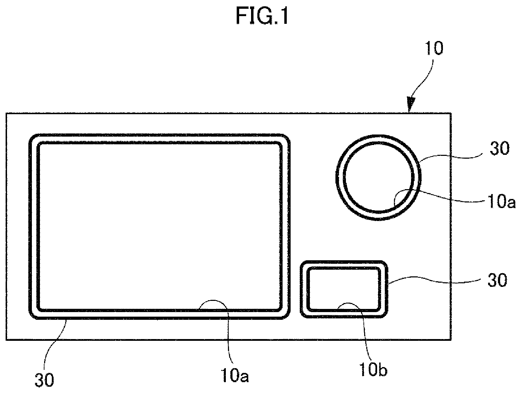

Before describing a gasket molding method according to an embodiment of the invention, a brief overview will be given of a workpiece 10 in which a gasket 30 is molded. FIG. 1 is a schematic plan view of the workpiece 10 in which the gasket 30 is molded.

The workpiece 10 is one or the other of two components assembled together through the gasket 30 and is of the desired size and shape. For example, the workpiece 10 may be made of metal such as iron, aluminum, stainless steel, magnesium, and titanium; carbon; or resin such as polyvinyl chloride, polyethylene naphthalate, polyethylene terephthalate, polyethylene, polypropylene, and polycarbonate. In this embodiment, the workpiece 10 is in the form of a rectangular plate.

The workpiece 10 has one or more openings 10a and/or one or more recesses 10b formed therein. The gasket 30 is formed around the openings 10a and/or the recesses 10b. The molding surface of the workpiece 10 for forming the gasket 30 is preferably flat; however, it may also have a gently inclined surface portion.

It should be noted that the workpiece 10 need not necessarily have the openings 10a and the recesses 10b; instead, the other component may have the openings 10a and the recesses 10b.

Next, a gasket molding device used in the gasket molding method of the embodiment will be briefly described.

The gasket molding device mainly includes an application device, a bonding device, an XYZ-axis drive device, a first active energy ray irradiation device 60, a demolding device, a second active energy ray irradiation device 70, and a control device.

The application device is capable of applying a liquid to an object to be coated. The application device may be, for example, a dispenser, a spray device, or a device used for application in inkjet printing, screen printing, gravure printing, and the like. Among these, a dispenser is preferred. The application device of this embodiment includes a dispenser 50 that ejects a liquid from a nozzle toward an object to be coated, a tank or syringe that stores the liquid, and a pump that supplies the liquid. The application device may also include a rotation mechanism that allows the nozzle to rotate about the Z-axis.

The bonding device may be of the clamshell type having a fixed table for holding one of the objects to be bonded (molding die 40), a movable table for holding the other of the objects to be bonded (workpiece 10), and a reversing drive unit configured to move the movable table reversely toward and away from the fixed table. However, the structure of the bonding device is not limited to the clamshell type.

The bonding device further includes an imaging device, such as a CCD camera, for capturing images of the objects to be bonded so that the position, inclination, and the like of the objects can be checked during the bonding process. The bonding device is also used as the demolding device for separating the bonded objects. However, the demolding device and the bonding device may be provided as independent units.

The XYZ-axis drive device includes an X-axis moving unit that moves the dispenser 50 in the horizontal direction (left/right), a Y-axis moving unit that moves the dispenser 50 in the front-rear direction, and a Z-axis moving unit that moves the dispenser 50 in the vertical direction (up/down). Note that the XYZ-axis drive device may have any configuration as long as it can move the dispenser 50 along the three-dimensional XYZ axes relative to an object to be coated. For example, the XYZ-axis drive device may include an XY table that holds the dispenser 50 and a Z table that holds an object to be coated.

The first active energy ray irradiation device 60 is designed to irradiate light such as electron beams or ultraviolet (UV) rays with wavelengths of about 320 nm or more and 450 nm or less, and it is configured as a linear light source or a planar surface light source using a UV lamp or UV LED. The active energy ray irradiation device 60 is arranged to be either movable or fixed with respect to an object to be coated.

The first active energy ray irradiation device 60 is preferably capable of irradiating active energy rays with a peak intensity of 500 mW/cm² or more and 5000 mW/cm² or less, more preferably 1500 mW/cm² or more and 5000 mW/cm² or less, since this helps to suppress the curing shrinkage of an active energy ray curable liquid 20, thereby enhancing dimensional stability. In addition, the cumulative light amount can be adjusted by setting the irradiation time.

Similarly, the second active energy ray irradiation device 70 is designed to irradiate light such as electron beams or UV rays with wavelengths of about 320 nm or more and 450 nm or less, and it is also configured as a linear light source or a planar surface light source using a UV lamp or UV LED. The active energy ray irradiation device 70 is arranged to be either movable or fixed with respect to an object to be irradiated. Preferably, the active energy ray irradiation device 70 is capable of irradiating active energy rays with a peak intensity of 500 mW/cm² or more and 5000 mW/cm² or less, and the irradiation time is adjustable.

The control device integrates and controls the application device, the bonding device (demolding device), the XYZ-axis drive device, and the active energy ray irradiation devices 60 and 70. For example, the control device controls the rotational speed (rotational frequency, rotation angle) of the pump to adjust the amount dispensed by the dispenser 50. The control device also controls the rotational speed (rotation angle) of the reversing drive unit to adjust the bonding load and push-in amount, thereby controlling the load or position of the movable table. Additionally, the control device controls the position and speed of the dispenser 50 by driving each moving unit of the XYZ-axis drive device and controls the power supply to the active energy ray irradiation devices 60 and 70 to adjust the irradiation output of the light sources.

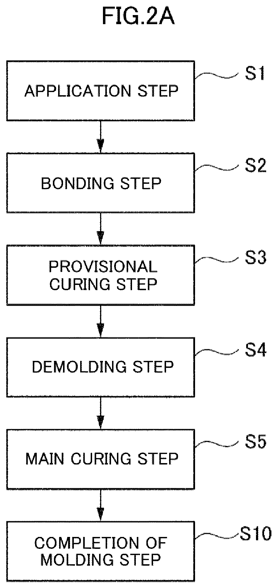

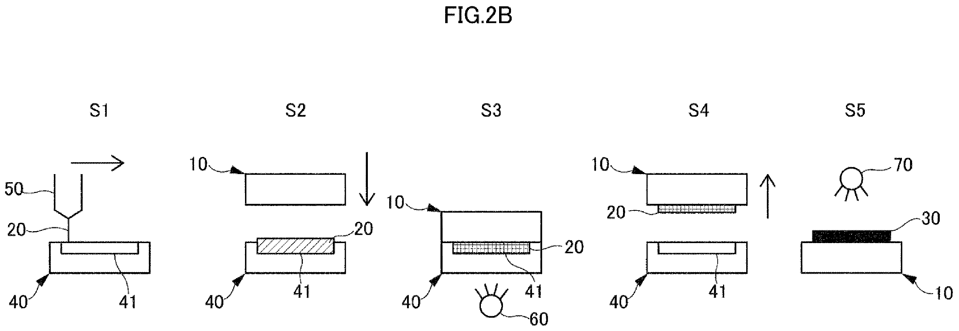

Next, the gasket molding method for molding the gasket 30 on the workpiece 10 using the active energy ray curable liquid 20 will be described. FIG. 2A is a flowchart illustrating the gasket molding method according to the embodiment. FIG. 2B is a diagram illustrating the operation of the gasket molding method.

The active energy ray curable liquid 20 is a UV-curable resin that reacts and cures when irradiated with active energy rays (e.g., UV light). The active energy ray curable liquid 20 may include, for example, a (meth)acrylate composition that undergoes radical polymerization or an epoxy composition that undergoes cationic polymerization. For example, ThreeBond 3178 (manufactured by ThreeBond Co., Ltd.) may be used.

Incidentally, the term "liquid" as used herein means being in a liquid state at 25°C. The viscosity of the active energy ray curable liquid 20 at 25°C is not particularly limited; however, it may be, for example, 500 Pa·s or less, preferably 0.01 Pa·s or more and 400 Pa·s or less, more preferably 0.1 Pa·s or more and 350 Pa·s or less, and particularly preferably 1 Pa·s or more and 300 Pa·s or less. Likewise, the structural viscosity ratio of the active energy ray curable liquid 20 at 25°C is not particularly limited; however, it may be, for example, 1.0 or more and 10 or less, preferably 1.1 or more and 8 or less, more preferably 1.3 or more and 7 or less, and particularly preferably 2.0 or more and 6 or less. The active energy ray curable liquid 20 may be even more suitable for the gasket molding method of the embodiment when its viscosity or structural viscosity ratio falls within the above ranges. The viscosity and structural viscosity ratio can be measured using a rheometer.

Examples of the (meth)acrylate composition that undergoes radical polymerization include those containing a (meth)acryloyl group-containing oligomer, a (meth)acryloyl group-containing reactive diluent, and a photoradical initiator. Examples of the (meth)acryloyl group-containing oligomer include, but are not limited to, urethane (meth)acrylate with a polycarbonate backbone, urethane (meth)acrylate with a polyether backbone, urethane (meth)acrylate with a polyester backbone, urethane (meth)acrylate with a castor oil backbone, urethane (meth)acrylate with a polybutadiene backbone, urethane (meth)acrylate with a hydrogenated polybutadiene backbone, polyisobutylene-based (meth)acrylate, silicone-based (meth)acrylate, isoprene-based (meth)acrylate, hydrogenated isoprene-based (meth)acrylate, and (meth)acrylic group-containing acrylic polymer; of these, polyisobutylene-based (meth)acrylate is preferred. Examples of the (meth)acryloyl group-containing reactive diluent include, but are not limited to, ethyl (meth)acrylate, n-butyl (meth)acrylate, tert-butyl (meth)acrylate, isobutyl methacrylate, 2-ethylhexyl (meth)acrylate, isodecyl (meth)acrylate, glycidyl (meth)acrylate, lauryl (meth)acrylate, stearyl (meth)acrylate, tetrahydrofurfuryl (meth)acrylate, cyclohexyl (meth)acrylate, t-butylcyclohexyl (meth)acrylate, trimethylcyclohexyl (meth)acrylate, dicyclopentanyl (meth)acrylate, dicyclopentenyl (meth)acrylate, dicyclopentenyloxy (meth)acrylate, isobornyl (meth)acrylate, adamantyl (meth)acrylate, benzyl (meth)acrylate, phenyl (meth)acrylate, phenoxyethyl (meth)acrylate, nonylphenoxyethyl (meth)acrylate, butoxyethyl (meth) acrylate, 2-hydroxyethyl (meth)acrylate, 2-hydroxypropyl (meth)acrylate, 4-hydroxybutyl (meth)acrylate, acryloylmorpholine, morpholinoethyl (meth)acrylate, dimethylaminoethyl (meth)acrylate, diethylaminoethyl (meth)acrylate, N,N-dimethylaminoethyl (meth)acrylate, and N,N-dimethylaminopropyl (meth) acrylate. Examples of the photoradical initiator include, but are not limited to, acetophenone-based photoradical polymerization initiators, benzoin-based photoradical polymerization initiators, benzophenone-based photoradical polymerization initiators, thioxanthone-based photoradical polymerization initiators, acylphosphine oxide-based photoradical polymerization initiators, and titanocene-based photoradical polymerization initiators.

Examples of the epoxy composition that undergoes cationic polymerization include those containing a cationically polymerizable compound and a photocationic initiator. Examples of the cationically polymerizable compound include, but are not limited to, epoxy resins, alicyclic epoxy resins, oxetane compounds, and vinyl ether compounds. Examples of the photocationic initiator include, but are not limited to, onium salts such as aromatic iodonium salts and aromatic sulfonium salts.

A thixotropic agent may be added to the active energy ray curable liquid 20 in order to impart thixotropy thereto. Examples of the thixotropic agent include, but are not limited to, silica, amide wax, and hydrogenated castor oil; among these, silica is preferred.

Examples of the silica mentioned above include hydrophilic silica and hydrophobic silica. The hydrophobic silica may be a silica that has been treated to be hydrophobic with organochlorosilanes, polyorganosiloxane, hexamethyldisilazane, or the like.

The gasket molding method of the embodiment includes an application step S1, a bonding step S2, a provisional curing step S3, a demolding step S4, and a main curing step S5, which are performed in this order.

In the application step S1, first, the dispenser 50 applies the active energy ray curable liquid 20 into a cavity 41 of a molding die 40 (described later) in a desired gasket shape, while moving along, for example, a unicursal or single-stroke trajectory.

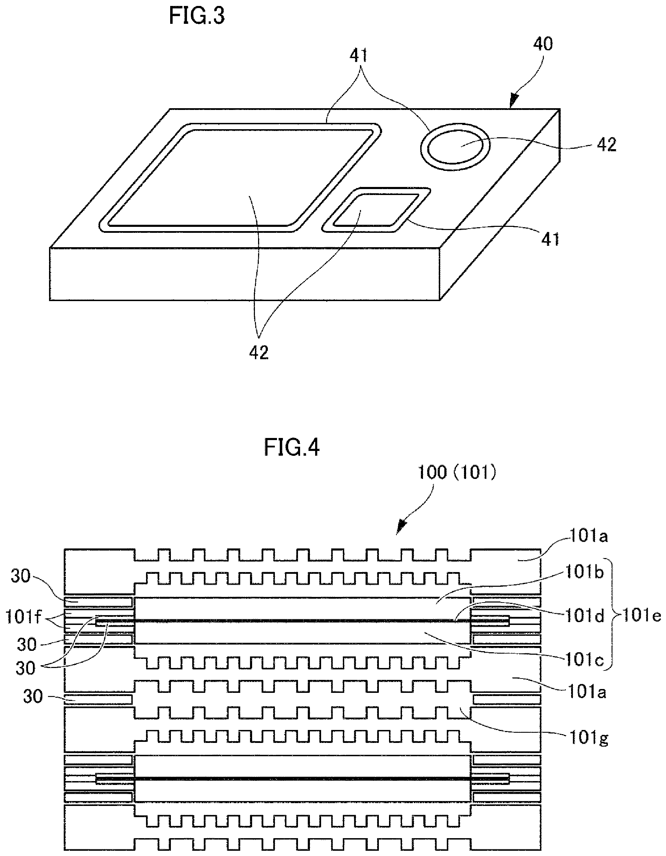

Described below is the molding die 40. FIG. 3 is a schematic perspective view of the molding die 40.

The molding die 40 is held on the fixed table of the bonding device and includes the cavity 41 having a shape corresponding to the gasket 30 to be molded. The cavity 41 has, for example, a circular, elliptical, or rectangular ring shape, and its inside forms a land portion 42. It should be noted that the cavity 41 may have any shape, including a closed shape where a trajectory does not overlap another trajectory, such as a single-stroke trajectory, or a closed shape where a trajectory overlaps another trajectory.

In addition, the cavity 41 is formed to have a cross-section of the same shape as the cross-section of the desired gasket 30, such as substantially rectangular, trapezoidal, triangular (mountain-shaped), semicircular, or the like. The cross-section of the cavity 41 may have a height greater than its width or, conversely, a width greater than its height.

The molding die 40 is made of a transparent material that allows light to pass therethrough; for example, it may be made of one or more materials selected from the group consisting of polymethyl methacrylate, cycloolefin polymer, polycarbonate, and glass. Incidentally, the surface of the cavity 41 may be subjected to a surface treatment which improves its releasability.

Referring back to FIG. 2A, the description of the application step S1 is continued. In the application step S1, the dispenser 50 may dispense the active energy ray curable liquid 20 in an amount equal to or greater than 100% of the volume of the cavity 41 so that the liquid 20 slightly overflows from the cavity 41. Specifically, the dispensing amount per unit length may be set to 100% or more of the volume per unit length. The upper limit for the dispensing amount may be approximately 110%.

Next, in the bonding step S2, the movable table of the bonding device which holds the workpiece 10 is reversed so as to face the fixed table which holds the molding die 40 coated with the active energy ray curable liquid 20. The molding die 40 and the workpiece 10 are then bonded together with the uncured active energy ray curable liquid 20 interposed between them.

At this time, the molding die 40 and the workpiece 10 are bonded at a low bonding load (e.g., 1 MPa or less). The bonding load may be applied along with pressure control by measuring the bonding pressure, or it may be applied along with position control by measuring the bonding amount (push-in amount). In this manner, the molding die 40 and the workpiece 10 can be bonded at a low load to form the gasket 30, thereby reducing the load on the workpiece 10.

Subsequently, in the provisional curing step S3, the active energy ray curable liquid 20 interposed between the molding die 40 and the workpiece 10 is provisionally cured by irradiation with active energy rays emitted from the active energy ray irradiation device 60.

The active energy ray irradiation device 60 is located on the side opposite to the molding surface of the molding die 40 where the cavity 41 is formed. The irradiated active energy rays pass through the transparent molding die 40 and reach the active energy ray curable liquid 20. Although not particularly limited, the curing shrinkage rate of the active energy ray curable liquid 20 is preferably, for example, 10% or less, more preferably 2% or more and 10% or less.

As the curing of the active energy ray curable liquid 20 progresses with the irradiation of active energy rays, the number of acryloyl (CH₂=CH-C-) or methacryloyl (CH₂=C(CH₃)-) groups contained in the liquid 20 decreases. Therefore, the reaction rate, i.e., the degree of curing, of the active energy ray curable liquid 20 can be calculated based on the reduction rate of the acryloyl or methacryloyl groups before and after irradiation.

The reduction rate of the acryloyl or methacryloyl groups can be determined by measuring the IR spectrum using a Fourier transform infrared (FT-IR) spectrometer (Spectrum 100, manufactured by PerkinElmer, Inc.). Specifically, the reduction rate is calculated by substituting into the following Equation (1) the height P1 of the absorption peak (the absorption peak of CH₂=CH₂- group) at 1635 cm⁻¹ from the baseline in the FT-IR measurement chart of the active energy ray curable liquid 20 before irradiation and the height P2 of the absorption peak at 1635 cm⁻¹ from the baseline in the FT-IR measurement chart of the active energy ray curable liquid 20. Reduction rate (reaction rate, degree of curing) (%) = ((P1 - P2) / P1) x 100 ... (1)

Therefore, the relationship between the reaction rate of the active energy ray curable liquid 20 and the irradiation amount (cumulative light amount) of active energy rays may be determined in advance through experimentation. This information may be utilized in the provisional curing step S3, where active energy rays may be irradiated by adjusting the cumulative light amount to ensure that the reaction rate of the active energy ray curable liquid 20 falls within the range of 20% to 85%. When the cumulative light amount is kept within the above range, the occurrence of outgassing associated with curing can be suppressed. As a result, even if the molding die 40 is used repeatedly, no deposits accumulate on the molding die 40, thereby ensuring the sealing properties of the molded gasket 30.

For example, the gasket 30 was molded using an active energy ray curable liquid that contains a polyisobutylene-based (meth)acrylate with a viscosity of 45 Pa·s at 25° C and a structural viscosity ratio of 1.9 (manufactured by ThreeBond Co., Ltd.) as the active energy ray curable liquid 20. The active energy ray curable liquid 20, applied to a thickness of 1000 µm, was irradiated with active energy rays having a wavelength of 405 nm and an intensity of 1500 mW/cm² at four different cumulative light amounts: 20 mJ/cm², 300 mJ/cm², 500 mJ/cm², and 4000 mJ/cm². As a result, the reaction rates were 68%, 77%, 85%, and 91%, respectively.

Accordingly, in the provisional curing step S3, the cumulative light amount is preferably a low amount of 100 mJ/cm² or more and 500 mJ/cm² or less, and more preferably 100 mJ/cm² or more and 400 mJ/cm² or less. However, the peak intensity of the active energy rays is set to 500 mW/cm² or more and 5000 mW/cm² or less. By irradiating the active energy ray curable liquid 20 with the active energy rays of such high peak intensity, curing begins instantaneously from the outer layer, which helps to reduce the curing shrinkage rate of the active energy ray curable liquid 20 relative to the cavity 41 of the molding die 40. In addition, since the occurrence of outgassing associated with curing can also be suppressed, even if the molding die 40 is used repeatedly, no deposits accumulate on the molding die 40, thereby ensuring the sealing properties of the molded gasket 30.

In the demolding step S4, the bonding device, functioning as the demolding device, reverses the movable table to separate it from the fixed table so that the provisionally cured active energy ray curable liquid 20 (as the gasket 30) is pulled out of (the cavity 41 of) the molding die 40 together with the workpiece 10.

Thereafter, in the final main curing step S5, the provisionally cured active energy ray curable liquid 20, which has been transferred to the workpiece 10, is fully cured by irradiation with active energy rays emitted from the second active energy ray irradiation device 70.

In the main curing step S5, active energy rays may be irradiated by adjusting the cumulative light amount so that the reaction rate of the active energy ray curable liquid 20, which has been provisionally cured to a reaction rate of 20% or more and 85% or less, becomes more than 85% and not more than 100%.

For example, in the main curing step S5, the cumulative light amount is preferably a high amount of 1,000 mJ/cm² or more and 10,000 mJ/cm² or less. Incidentally, the active energy ray irradiation device 70 is located on the molding surface side of the workpiece 10 where the gasket 30 is formed.

After that, the workpiece 10 is removed from the movable table, and a molding step S10 is completed. Thus, the workpiece 10 can be obtained with the gasket 30 formed directly on its surface. Note that the workpiece 10 may be removed from the movable table before the main curing step S5.

Described below is an example in which the gasket molding method of the embodiment is applied to a production method of a fuel cell 100 using a fuel cell component 101 as the workpiece 10 for forming the gasket 30. FIG. 4 is a schematic cross-sectional view of the fuel cell 100.

Examples of the fuel cell component 101 include a separator 101a, an electrolyte membrane 101d, a frame 101f, and an electrolyte membrane/electrode assembly 101e, which constitute (a cell of) the fuel cell 100 (see FIG. 4), and the gasket 30 is formed thereto.

Of these, it is preferable to form the gasket 30 on the separator 101a, which is made of aluminum, stainless steel, titanium, graphite, carbon, or the like. FIG. 4 also illustrates a fuel electrode 101b, an air electrode 101c, and a cooling water passage 101g.

The production method of the fuel cell 100 includes: an application step S1 of applying the active energy ray curable liquid 20 into the cavity 41 of the molding die 40; a bonding step S2 of bonding the molding die 40 coated with the active energy ray curable liquid 20 and the fuel cell component 101; a provisional curing step S3 of provisionally curing the applied active energy ray curable liquid 20 by irradiation with active energy rays; a demolding step S4 of removing the cured active energy ray curable liquid 20 from the molding die 40 together with the fuel cell component 101; and a main curing step S5 of fully curing the provisionally cured active energy ray curable liquid 20, which are performed in this order.

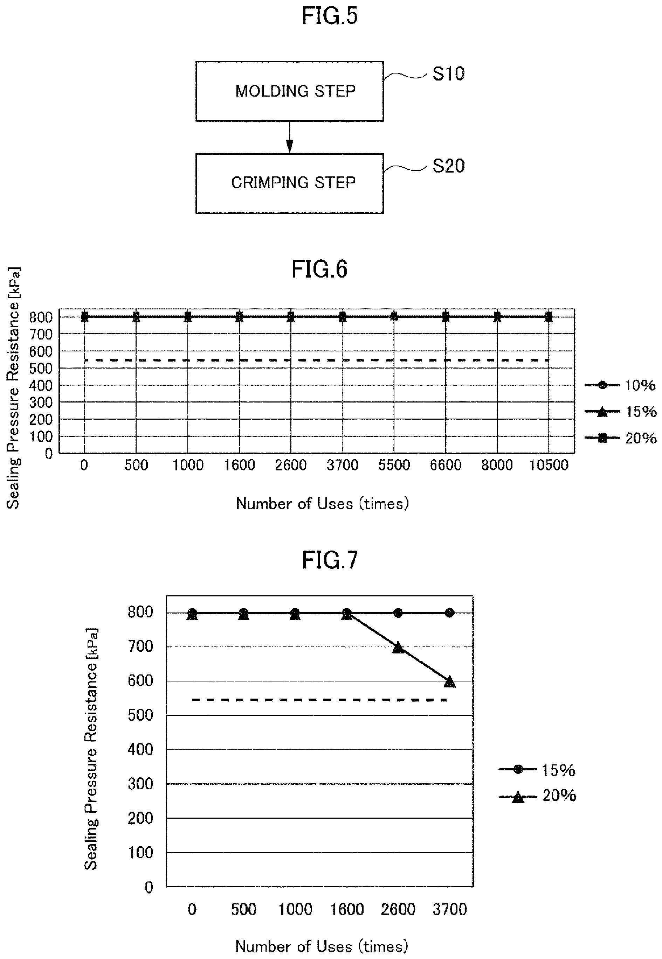

Described below is another example in which the gasket molding method of the embodiment is applied to a sealing method for sealing between two components. FIG. 5 is a flowchart illustrating the sealing method for sealing between two components.

The sealing method for sealing between two components includes a molding step S10 of molding the gasket 30 on one component (e.g., the workpiece 10 described above) and a crimping step S20 of crimping or pressure-bonding the one component and the other component.

The molding step S10 is performed as in the gasket molding method described above; therefore, the description thereof is omitted.

In the crimping step S20, the other component is placed on the gasket 30 molded on the one component, and the one component and the other component are crimped (pressure-bonded) together. In the crimping step S20, a crimping device such as the bonding device used in the bonding step S2 may be used, and position control or pressure control may be performed. If the two components are those that are fastened and secured together with a screw (bolt), they may be screwed together, or they may be joined together by riveting.

The sealing method is applicable not only to the fuel cell 100 described above, but also to relatively small components such as the main seal of a liquid crystal display (LCD) panel.

In the following, a description will be given of experiments conducted on the leakage performance of the gasket 30 formed by the gasket molding method of the embodiment.

### (Molding Conditions)

An active energy ray curable liquid that contains a polyisobutylene-based (meth)acrylate with a viscosity of 45 Pa·s at 25° C and a structural viscosity ratio of 1.9 (manufactured by ThreeBond Co., Ltd.) was used as the active energy ray curable liquid 20. The molding die 40 used was made of transparent polymethyl methacrylate and the cavity 41 formed therein for the gasket 30 was 1.2 mm wide x 1.0 mm high. The workpiece 10 used was an aluminum flange plate measuring 90 mm x 90 mm.

The curing conditions were as described in the provisional curing step S3 and main curing step S5 of Example 1 below. For comparison, curing was performed in a single curing step in Comparative Example 1.

A total of 3,000 gaskets (30) were molded using the same molding die 40; the 3000th gasket (30) was molded on the workpiece 10, and the following leak test was carried out.

### (Leak Test)

A flange plate with the gasket 30 formed thereon was fastened to a pressure vessel having a rectangular pressure-resistant flange with a flange opening of 80 mm x 80 mm and a flange width of 10 mm, and the vessel was then submerged in water. The flange plate was fastened with a fastening force such that the gasket 30 was compressed at a compression rate (compression amount) of 15%. Dry air at 25°C was injected into the submerged pressure vessel at a pressure increase rate of 50 kPa for 30 seconds until the pressure reached 800 kPa.

### (Leak Determination)

If there was an air leakage of 15 ml (15 cc) or more per second, it was determined to be a leak, and the pressure immediately before the leakage was taken as the leak resistance pressure.

### (Example 1)

In the provisional curing step S3, active energy rays with a wavelength of 405 nm and an intensity of 1500 mW/cm² were irradiated from the first active energy ray irradiation device 60 at a cumulative light amount (specifically, 300 mJ/cm²) set to achieve a reaction rate of 77%.

In the main curing step S5, active energy rays with a wavelength of 405 nm and an intensity of 1500 mW/cm² were irradiated from the second active energy ray irradiation device 70 at a cumulative light amount (specifically, 4000 mJ/cm²) set to achieve a reaction rate of 91%.

### (Comparative Example 1)

In the single curing step, active energy rays with a wavelength of 405 nm and an intensity of 1500 mW/cm² were continuously irradiated from an active energy ray irradiation device at a cumulative light amount (specifically, 4000 mJ/cm²) set to achieve a reaction rate of 89%.

As a result of the leak test, the leak resistance pressure in Comparative Example 1 was 700 kPa, whereas that in Example 1 was 800 kPa. This indicates that the gasket 30 molded by the gasket molding method of the embodiment is superior in performance.

In addition, an experiment was conducted to evaluate the durability of the molding die 40 when the gasket molding method of the embodiment was used. FIG. 6 is a graph illustrating the durability of the molding die 40 used in the gasket molding method of the embodiment. FIG. 7 is a graph illustrating the durability of the molding die 40 used in a conventional gasket molding method. In FIGS. 6 and 7, the dashed line indicates the target value (550 kPa) for leakage performance.

### (Durability Test)

The same molding die 40 was used to continuously mold gaskets (30), and the above leak test was carried out after every predetermined number of molding cycles (gaskets). The leak test was conducted three times for each of three different compression amounts (10%, 15%, and 20%).

In the case of the conventional gasket molding method, as illustrated in FIG. 7, the leakage performance of the molded gaskets (30) began to decrease after around 2,600 uses of the molding die 40, and by 3,700 uses, the sealing pressure resistance was approximately 70% of the target value of 550 kPa. This means that the molding die 40 needs to be cleaned, washed, or wiped after every 2,000 uses or more. Therefore, productivity (yield) is not favorable.

On the other hand, in the case of the gasket molding method of the embodiment, as illustrated in FIG. 6 (where the points for the different compression amounts are almost all overlapping), no change was observed in the leakage performance of the molded gaskets (30) even after the number of uses of the molding die 40 exceeded 10,000. Thus, it is possible to mold a gasket (30) that exhibits stable sealing pressure resistance under all fastening conditions. Therefore, the molding die 40 only needs to be cleaned, washed, or wiped after it has been used more than 10,000 times, significantly improving productivity.

As described above, according to an embodiment, a gasket molding method is a method for molding a gasket (30) on a workpiece (10). The gasket molding method includes: an application step S1 of applying the active energy ray curable liquid 20 into the cavity 41 of the transparent molding die 40; a bonding step S2 of bonding the molding die 40 coated with the active energy ray curable liquid 20 and the workpiece 10; a provisional curing step S3 of irradiating the applied active energy ray curable liquid 20 with active energy rays at a cumulative light amount that achieves a reaction rate of 20% or more and 85% or less as calculated from an IR spectrum; a demolding step S4 of removing the provisionally cured active energy ray curable liquid 20 from the molding die 40 together with the workpiece 10; and a main curing step S5 of irradiating the provisionally cured active energy ray curable liquid 20 with active energy rays at a cumulative light amount that achieves a reaction rate of more than 85% and up to 100% as calculated from the IR spectrum, which are performed in this order. As a result, even if the number of uses of the molding die 40 increases, deposits are less likely to accumulate on the molding die 40, thereby reducing the amount of cleaning required. Furthermore, the gasket 30 can be molded under low pressure by using the active energy ray curable liquid 20.

In some embodiments, in the provisional curing step S3, the active energy ray curable liquid 20 is irradiated with active energy rays having a wavelength of 320 nm or more and 450 nm or less and a peak intensity of 500 mW/cm² or more and 5000 mW/cm² or less. This helps to suppress the curing shrinkage of the active energy ray curable liquid 20, thereby enhancing dimensional stability. Thus, the molded gasket 30 has excellent sealing properties.

In some embodiments, in the provisional curing step S3, the applied active energy ray curable liquid 20 is provisionally cured by irradiation with active energy rays at a low cumulative light amount of 100 mJ/cm² or more and 500 mJ/cm² or less. In the main curing step S5, the provisionally cured active energy ray curable liquid 20 is fully cured by irradiation with active energy rays at a high cumulative light amount of 1000 mJ/cm² or more and 10000 mJ/cm² or less. This allows for estimating the provisional and main curing states of the active energy ray curable liquid 20 based on the intensity and duration of the active energy rays.

In some embodiments, the application step S1 is performed using the dispenser 50. This makes it easier to control the amount of liquid dispensed in the application step S1. For example, if the dispenser 50 applies the liquid in a single-stroke trajectory, no overlapping portions occur where application paths intersect. As a result, the position and speed control of the dispenser 50 can be simplified.

In some embodiments, the molding die 40 is made of one or more materials selected from the group consisting of polymethyl methacrylate, cycloolefin polymer, polycarbonate, and glass. This allows the molding die 40 to have transparency. Accordingly, in the provisional curing step S3, active energy rays can be irradiated from the side opposite to the surface where the cavity 41 is formed.

According to an embodiment, the fuel cell 100 includes the gasket 30 obtained by the gasket molding method described above, and the fuel cell component 101 serves as the workpiece 10. The fuel cell component 101 is selected from the group consisting of the separator 101a, the electrolyte membrane 101d, the frame 101f, and the electrolyte membrane/electrode assembly 101e.

According to an embodiment, a production method of the fuel cell 100 includes: an application step S1 of applying the active energy ray curable liquid 20 into the cavity 41 of the molding die 40; a bonding step S2 of bonding the molding die 40 coated with the active energy ray curable liquid 20 and the fuel cell component 101; a curing step S3 of curing the applied active energy ray curable liquid 20 by irradiation with active energy rays; and a demolding step S4 of removing the cured active energy ray curable liquid 20 from the molding die 40 together with the fuel cell component 101.

In this manner, the gasket molding method can be applied to the production method of the fuel cell 100. Furthermore, in the gasket molding method of the embodiment, molding can be performed under low pressure, and the gasket 30 can be formed by bonding under low load. As a result, the load on the fuel cell component 101 can be reduced.

According to an embodiment, a sealing method is a method for sealing between two components. The sealing method includes: a molding step S10 of molding the gasket 30 on one component by the gasket molding method described above; and a crimping step S20 of placing the other component on the gasket 30 molded on the one component and crimping the one component and the other component together. In this manner, the gasket molding method can also be applied to the sealing method.

According to an embodiment, a gasket molding device includes: an application device that ejects the active energy ray curable liquid 20 onto the molding die 40 using the dispenser 50; a drive device that moves the molding die 40 and the dispenser 50 relative to each other; a bonding device that includes the molding die 40 having transparency and bonds the workpiece 10 to the molding die 40; and the first and second active energy ray irradiation devices 60 and 70 that irradiate the active energy ray curable liquid 20 with active energy rays. Thus, the gasket 30 can be molded under low pressure by ejecting the active energy ray curable liquid 20 using the dispenser 50.

Although specific embodiments of the invention have been described and illustrated, it should be understood that the invention is not limited to the embodiments disclosed herein. Various changes, modifications, and alterations may be made within the scope of the invention as defined by the appended claims.

### (Modification)

In the above embodiment, different devices are employed for the first active energy ray irradiation device 60 used in the provisional curing step S3 and the second active energy ray irradiation device 70 used in the main curing step S5. However, for example, a single irradiation device may be used for both steps. In this case, it is preferable that the irradiation energy (peak intensity) be adjustable.

### [List of Reference Signs]

- 10: Workpiece
- 10a: Opening
- 10b: Recess
- 20: Active energy ray curable liquid
- 30: Gasket
- 40: Molding die
- 41: Cavity
- 42: Land portion
- 50: Dispenser
- 60: First active energy ray irradiation device
- 70: Second active energy ray irradiation device
- 100: Fuel cell
- 101: Fuel cell component
- 101a: Separator
- 101b: Fuel electrode
- 101c: Air electrode
- 101d: Electrolyte membrane
- 101e: Electrolyte membrane/electrode assembly
- 101f: Frame
- 101g: Cooling water passage

## Claims

1. A gasket molding method for molding a gasket on a workpiece, the method comprising, in the order recited:
an application step of applying an active energy ray curable liquid into a cavity of a transparent molding die;
a bonding step of bonding the molding die coated with the active energy ray curable liquid and the workpiece;
a provisional curing step of irradiating the applied active energy ray curable liquid with an active energy ray at a cumulative light amount that achieves a reaction rate of 20% or more and 85% or less as calculated from an IR spectrum;
a demolding step of removing the provisionally cured active energy ray curable liquid from the molding die together with the workpiece; and
a main curing step of irradiating the provisionally cured active energy ray curable liquid with an active energy ray at a cumulative light amount that achieves a reaction rate of more than 85% and up to 100% as calculated from the IR spectrum.

2. The gasket molding method according to claim 1, wherein, in the provisional curing step, the applied active energy ray curable liquid is irradiated with an active energy ray having a wavelength of 320 nm or more and 450 nm or less and a peak intensity of 500 mW/cm² or more and 5000 mW/cm² or less.

3. The gasket molding method according to claim 1 or 2, wherein
in the provisional curing step, the applied active energy ray curable liquid is provisionally cured by irradiation with an active energy ray at a low cumulative light amount of 100 mJ/cm² or more and 500 mJ/cm² or less, and
in the main curing step, the provisionally cured active energy ray curable liquid is fully cured by irradiation with an active energy ray at a high cumulative light amount of 1000 mJ/cm² or more and 10000 mJ/cm² or less.

4. The gasket molding method according to claim 1 or 2, wherein the application step is performed using a dispenser.

5. The gasket molding method according to claim 1 or 2, wherein the molding die is made of one or more materials selected from a group consisting of polymethyl methacrylate, cycloolefin polymer, polycarbonate, and glass.

6. The gasket molding method according to claim 1 or 2, wherein the workpiece is a fuel cell component.

7. A gasket obtained by the gasket molding method according to claim 1 or 2.

8. A fuel cell component, comprising a gasket obtained by the gasket molding method according to claim 1 or 2.

9. A fuel cell, comprising a gasket obtained by the gasket molding method according to claim 1 or 2.

10. A fuel cell production method using the gasket molding method according to claim 6, wherein the fuel cell component is selected from a group consisting of a separator, an electrolyte membrane, a frame, and an electrolyte membrane/electrode assembly.

11. A sealing method for sealing between two components, comprising:
a molding step of molding a gasket on one component by the gasket molding method according to claim 1 or 2; and
a crimping step of placing another component on the gasket molded on the one component and crimping the one component and the other component together.

12. A gasket molding device, comprising:
an application device that ejects an active energy ray curable liquid onto a molding die using a dispenser;
a drive device that moves the molding die and the dispenser relative to each other;
a bonding device that includes the molding die having transparency and bonds a workpiece to the molding die; and
an active energy ray irradiation device that irradiates the active energy ray curable liquid with an active energy ray,
wherein the active energy ray irradiation device is configured to
irradiate, through the molding die, the ejected active energy ray curable liquid with an active energy ray at a cumulative light amount that achieves a reaction rate of 20% or more and 85% or less as calculated from an IR spectrum, and
irradiate the provisionally cured active energy ray curable liquid, which has been removed from the molding die together with the workpiece, with an active energy ray at a cumulative light amount that achieves a reaction rate of more than 85% and up to 100% as calculated from the IR spectrum.
